# EUROPEAN PATENT SPECIFICATION

(11) **EP 3 505 435 B1**
(45) Date of publication and mention of the grant of the patent: **09.09.2020**
(21) Application number: 18197929.5
(22) Date of filing: 01.10.2018
(51) Int. Cl.: B62K 25/28, B62K 25/02, B62M 23/02, B60K 7/00, B62M 7/12, B62K 25/00

(54) **HEAT DISSIPATION STRUCTURE OF AXLE SHAFT FOR POWER WHEEL OF ELECTRIC MOTORCYCLE**
WÄRMEABLEITUNGSSTRUKTUR EINER ACHSWELLE FÜR EIN KRAFTRAD EINES ELEKTROMOTORRADS
STRUCTURE DE DISSIPATION DE CHALEUR D'ARBRE D'ESSIEU DE ROUE MOTRICE DE MOTOCYCLETTE ÉLECTRIQUE

(30) Priority: 28.12.2017 TW 106146370
(43) Date of publication of application: 03.07.2019
(73) Proprietor: Reduce Carbon Energy Develop Co., Ltd., New Taipei City 238 (TW)
(72) Inventor: Chen, Fu-Chieh, 238 New Taipei City (TW)
(74) Representative: Brown, Michael Stanley

(56) References cited:
- WO-A1-2010/124624
- WO-A1-2017/155673
- WO-A2-2011/015782
- DE-A1- 19 732 273
- JP-B2- 4 932 012

## Description

### FIELD OF THE INVENTION

The present invention relates to a power wheel axle shaft of an electronic motorcycle having a heat dissipation structure.

### BACKGROUND OF THE INVENTION

A hub motor of a conventional electronic motorcycle drives a wheel.

The hub motor is typically an outer rotation motor and has a stator which contains a support rack and multiple coil sets. Each of the multiple coil sets is arranged around an outer wall of the support rack, an axle shaft of the power wheel is connected to the support rack, and a rotor of the hub motor is connected to a rim of the power wheel. The rim produces thermal energy, and dust, objects, and rain are stopped from entering the hub motor. The thermal energy conducts the heat to the support rack and the axle shaft from the rim so that the temperature of the support rack and the axle shaft increases, thus reducing the service life of the axle shaft.

One form of integrated hub motor is described in Specification No. WO 2010/124624, which discloses all of the features of the preamble of claim 1, but this also has a number of disadvantages.

The present invention has arisen to mitigate and/or obviate the afore-described disadvantages.

### SUMMARY OF THE INVENTION

The primary objective of the present invention is to provide a heat dissipation structure of a power wheel axle shaft of an electronic motorcycle which dissipates the heat of the shaft body by using the thermal conduction element.

To obtain the above objective, there is provided a power wheel axle shaft of an electronic motorcycle as claimed in claim 1.

Preferably, the second tubular section has a threaded portion formed on an inner wall thereof so that the second tubular section screws with the bushing.

Preferably, the first tubular section has two planes formed on an outer wall thereof, each of the two planes is symmetrical relative to the center of the first tubular section so that it can be clamped by a wrench or other hand tools, hence the thermal conduction element (20) is rotated to connect with or remove from the support rack (32).

Preferably, the thermal conduction element is provided with a fitting sleeve which is fitted on an outer wall of the first tubular section.

Preferably, the fitting sleeve includes a peripheral rib extending outward from the outer wall thereof and configured to abut against the connection portion of the thermal conduction element.

### BRIEF DESCRIPTION OF THE DRAWINGS

FIG. 1 is a perspective view showing the exploded components of a power wheel axle shaft of an electronic motorcycle according to a first embodiment of the present invention.
FIG. 2 is a cross sectional view showing the assembly of a part of the heat dissipation structure of the power wheel axle shaft according to the first embodiment of the present invention.
FIG. 3 is a cross sectional view showing the application of a part of the heat dissipation structure of the power wheel axle shaft according to the first embodiment of the present invention.
FIG. 4 is a cross sectional view showing the assembly of a part of the heat dissipation structure of the power wheel axle shaft according to a second embodiment of the present invention.
FIG. 5 is a perspective view showing the assembly of a part of the heat dissipation structure of a power wheel axle shaft according to a third embodiment of the present invention.

### DETAILED DESCRIPTION OF THE PREFERRED EMBODIMENTS

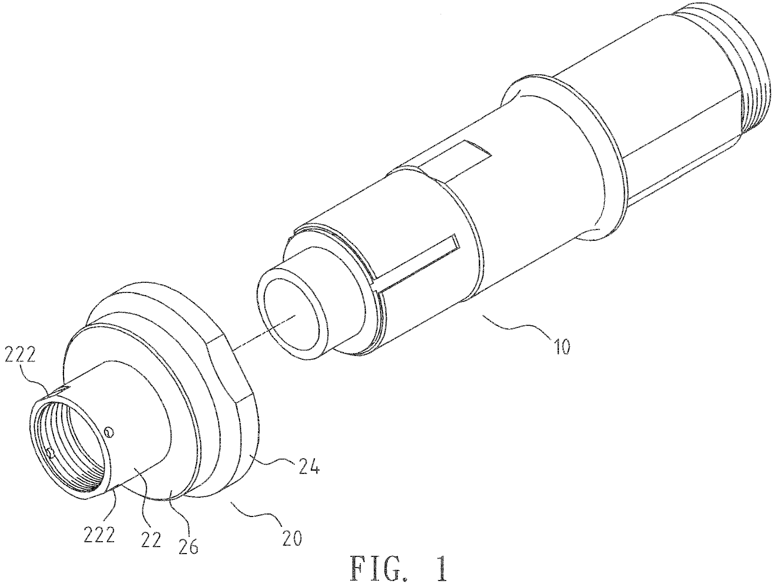

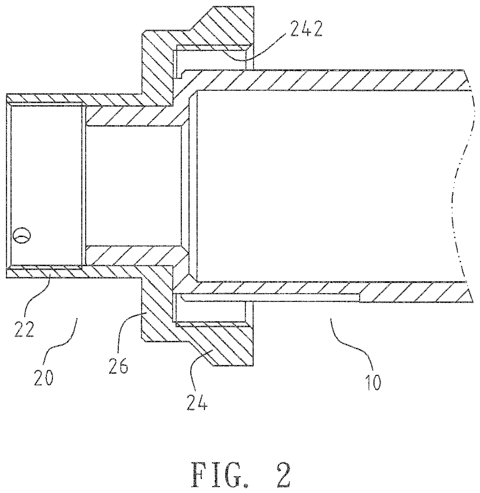

With reference to FIGS. 1 and 2, a heat dissipation structure of a power wheel axle shaft of an electronic motorcycle according to a first embodiment of the present invention comprises a shaft body 10 and a thermal conduction element 20. The shaft body 10 is a hollow tube, a first end of the shaft body 10 is in connection with a frame unit (not shown) of the electronic motorcycle, wherein the shaft body 10 is coupled with a rocker arm of the frame unit based on using requirements, and the thermal conduction element 20 is fitted with a second end of the shaft body 10. The frame unit and the rocker arm are well-known arts, so further remarks are omitted.

The thermal conduction element 20 is tubular and is made of thermal conductive metal, for example, the thermal conduction element 20 is made of copper or copper alloy. The thermal conduction element 20 includes a first tubular section 22 and a second tubular section 24 connecting with the first tubular section 22 by using a connection portion 26, wherein an inner diameter of the first tubular section 22 is less than the second tubular section 24. The shaft body 10 is connected with the first tubular section 22 via the second tubular section 24, the first tubular section 22 has two planes 222 formed on an outer wall thereof, each of the two planes 222 is symmetrical to a center of the first tubular section 22, and the second tubular section 24 has a threaded portion 242 formed on an inner wall thereof.

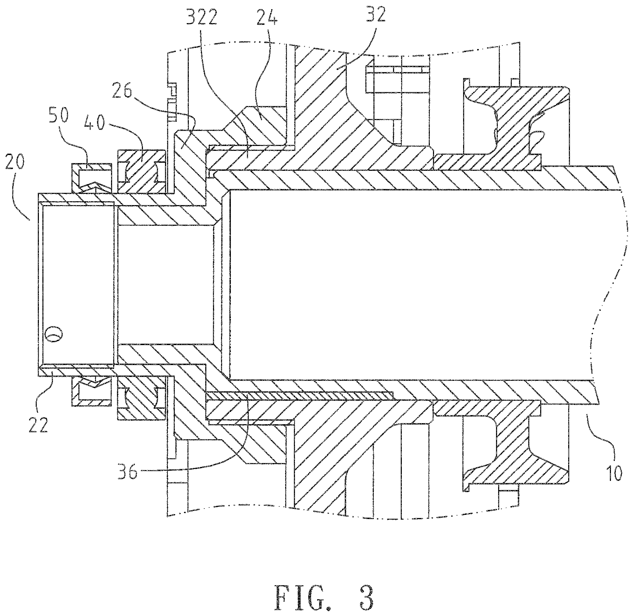

Referring to FIG. 3, the shaft body 10 is connected with a stator of a hub motor, and the hub motor is applied to drive the power wheel of the electronic wheel. The stator includes a support rack 32 and multiple coil sets (not shown), wherein each of the multiple coil sets is arranged around an outer wall of the support rack 32, and the support rack 32 has a bushing 322 formed on a central axle thereof and configured to accommodate the shaft body 10, wherein multiple keys 36 are defined between the shaft body 10 and the bushing 322 so that the shaft body 10 is coupled with the support rack 32. The second tubular section 24 is fitted into the bushing 322 so as to be screwed with the bushing 322 by way of the threaded section 242. The two planes 222 are clamped by a wrench or other hand tools, hence the thermal conduction element 20 is rotated to connect with or remove from the support rack 32.

The thermal conduction element 20 is rotatably connected with a casing (not shown) of the hub motor so that the stator and the shaft body 10 dissipate heat out of the hub motor via the thermal conduction element 20. The thermal conduction element 20 is connected with a bearing 40 and a dust-proof cover 50 so that the thermal conduction element 20 is rotatably connected with the casing (not shown) of the hub motor, and an interior of the shaft body 10 communicates with an exterior outside the hub motor via the first tubular section 22, and the thermal conduction section 20 is connected with the bearing 40 and the dust-proof cover 50 via the first tubular section 22.

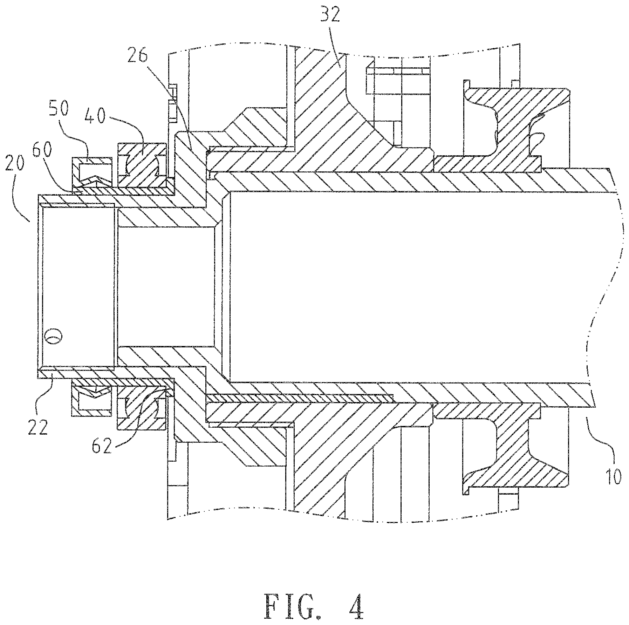

As shown in FIG. 4, a difference of a heat dissipation structure of a second embodiment from that of the first embodiment comprises: a shaft body 10 and a thermal conduction element 20, wherein the thermal conduction element 20 is fitted with a fitting sleeve 60 which is fitted on an outer wall of the first tubular section 22, and the fitting sleeve 60 includes a peripheral rib 62 extending outward from an outer wall thereof and configured to abut against the connection portion 26 of the thermal conduction element 20, such that the fitting sleeve 60 is defined among the thermal conduction element 20, the bearing 40, and the dust-proof cover 50 so as to reduce heat of the bearing 40 and the dust-proof cover 50 from the thermal conduction element 20.

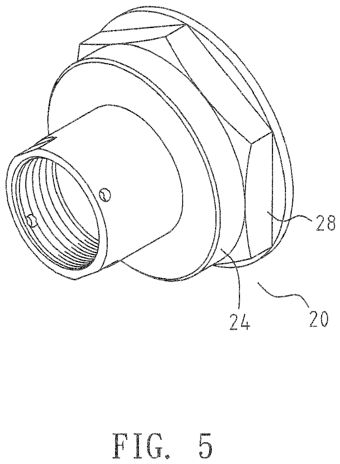

As illustrated in FIG. 5, a difference of a heat dissipation structure of a third embodiment from that of the first embodiment comprises: the thermal conduction element 20 including a polygonal engagement portion 28 formed on an outer wall of the thermal conduction element 20 and clamped by a wrench or other hand tools, hence the thermal conduction element 20 is rotated by the wrench or other hand tools easily. Furthermore, the engagement portion 28 is formed on an outer wall of the second tubular section 24.

Accordingly, the heat is conducted to the support rack 32 and the shaft body 10 from multiple coil sets, so a temperature of the support rack 32 and the shaft body 10 enhances. Thereafter, the support rack 32 and the shaft body 10 conducts the heat to the thermal conduction element 20 so that the heat is dissipated to the exterior outside the hub motor through the thermal conduction element 20, thus reducing the heat to the shaft body 10 from the support rack 32 and enhancing heat dissipation of the shaft body 10.

## Claims

1. A power wheel axle shaft of an electric motorcycle having a heat dissipation structure comprising a shaft body (10) and a thermal conduction element (20), wherein the shaft body (10) is a hollow tube, a first end of the shaft body (10) is in connection with a frame unit of the electric motorcycle, the thermal conduction element (20) is fitted on a second end of the shaft body (10), and the shaft body (10) is connected to a support rack (32) of a stator of a hub motor, **characterized in that** the support rack (32) has a bushing (322) formed on a central axis thereof and which accommodates the shaft body (10);
the thermal conduction element (20) is tubular and is made of thermal conductive metal, the thermal conduction element (20) includes a first tubular section (22) and a second tubular section (24) connecting with the first tubular section (22) by using a connection portion (26), wherein the shaft body (10) is connected with the thermal conduction element (20) via the first tubular section (22), and the second tubular section (24) is fitted onto the bushing (322).

2. The power wheel axle shaft as claimed in claim 1, **characterized in that** the second tubular section (24) has a threaded portion (242) formed on an inner wall thereof so that the second tubular section (24) screws with the bushing (322).

3. The power wheel axle shaft as claimed in claim 2, **characterized in that** the first tubular section (22) has two planes (222) formed on an outer wall thereof, each of the two planes (222) is symmetrical relative to the center of the first tubular section (22) so that it can be clamped by a wrench or other hand tools, hence the thermal conduction element (20) is rotated to connect with or remove from the support rack (32).

4. The power wheel axle shaft as claimed in claim 1, **characterized in that** the thermal conduction element (20) is provided with a fitting sleeve (60) which is fitted on an outer wall of the first tubular section (22).

5. The power wheel axle shaft as claimed in claim 4, **characterized in that** the fitting sleeve (60) includes a peripheral rib (62) extending outward from the outer wall thereof and configured to abut against the connection portion (26) of the thermal conduction element (20).

## Patentansprüche

1. Antriebsradachswelle eines elektrischen Motorrads mit einer Wärmeableitungsstruktur, die einen Wellenkörper (10) und ein Wärmeleitungselement (20) umfasst, wobei der Wellenkörper (10) ein Hohlrohr ist, ein erstes Ende des Wellenkörpers (10) mit einer Rahmeneinheit des elektrischen Motorrads in Verbindung steht, das Wärmeleitungselement (20) an einem zweiten Ende des Wellenkörpers (10) angebracht ist und der Wellenkörper (10) mit einem Stützträger (32) eines Stators eines Nabenmotors verbunden ist, **dadurch gekennzeichnet, dass** der Stützträger (32) eine Buchse (322) aufweist, die auf einer mittleren Achse davon gebildet ist und die den Wellenkörper (10) aufnimmt;
das Wärmeleitungselement (20) röhrenförmig ist und aus einem wärmeleitenden Metall hergestellt ist, das Wärmeleitungselement (20) einen ersten röhrenförmigen Abschnitt (22) und einen zweiten röhrenförmigen Abschnitt (24), der unter Verwendung eines Verbindungsteils (26) mit dem ersten röhrenförmigen Abschnitt (22) verbunden ist, aufweist, wobei der Wellenkörper (10) über den ersten röhrenförmigen Abschnitt (22) mit dem Wärmeleitungselement (20) verbunden ist und der zweite röhrenförmige Abschnitt (24) an der Buchse (322) angebracht ist.

2. Antriebsradachswelle nach Anspruch 1, **dadurch gekennzeichnet, dass** der zweite röhrenförmige Abschnitt (24) einen Gewindeteil (242) aufweist, der an einer Innenwand davon ausgebildet ist, so dass der zweite röhrenförmige Abschnitt (24) mit der Buchse (322) verschraubt wird.

3. Antriebsradachswelle nach Anspruch 2, **dadurch gekennzeichnet, dass** der erste röhrenförmige Abschnitt (22) zwei Ebenen (222) aufweist, die an einer Außenwand davon gebildet sind, wobei jede der beiden Ebenen (222) bezüglich der Mitte des ersten röhrenförmigen Abschnitts (22) symmetrisch ist, so dass sie durch einen Schraubenschlüssel oder andere Handwerkzeuge eingeklemmt werden können und daher das Wärmeleitungselement (20) zum Verbinden mit oder Entfernen von dem Stützträger (32) gedreht wird.

4. Antriebsradachswelle nach Anspruch 1, **dadurch gekennzeichnet, dass** das Wärmeleitungselement (20) mit einer Pass-Hülse (60) versehen ist, die auf einer Außenwand des ersten röhrenförmigen Abschnitts (22) angebracht ist.

5. Antriebsradachswelle nach Anspruch 4, **dadurch gekennzeichnet, dass** die Pass-Hülse (60) eine Umfangsrippe (62) aufweist, die sich von der Außenwand davon nach außen erstreckt und dazu ausgeführt ist, an den Verbindungsteil (26) des Wärmeleitungselements (20) anzustoßen.

## Revendications

1. Arbre d'essieu de roue motrice d'une motocyclette électrique ayant une structure de dissipation de chaleur comprenant un corps d'arbre (10) et un élément de conduction thermique (20), le corps d'arbre (10) étant un tube creux, une première extrémité du corps d'arbre (10) étant en connexion avec une unité de cadre de la motocyclette électrique, l'élément de conduction thermique (20) étant monté sur une deuxième extrémité du corps d'arbre (10), et le corps d'arbre (10) étant connecté à un support (32) d'un stator d'un moteur de moyeu, **caractérisé en ce que** le support (32) a une bague (322) formée sur un axe central de celui-ci et qui loge le corps d'arbre (10) ;
l'élément de conduction thermique (20) est tubulaire et est fabriqué en métal conducteur thermique, l'élément de conduction thermique (20) inclut une première section tubulaire (22) et une deuxième section tubulaire (24) se connectant avec la première section tubulaire (22) en utilisant une portion de connexion (26), le corps d'arbre (10) étant connecté avec l'élément de conduction thermique (20) par le biais de la première section tubulaire (22), et la deuxième section tubulaire (24) étant montée sur la bague (322).

2. Arbre d'essieu de roue motrice telle que revendiquée dans la revendication 1, **caractérisé en ce que** la deuxième section tubulaire (24) a une portion filetée (242) formée sur une paroi interne de celle-ci de telle sorte que la deuxième section tubulaire (24) se visse avec la bague (322).

3. Arbre d'essieu de roue motrice telle que revendiquée dans la revendication 2, **caractérisé en ce que** la première section tubulaire (22) a deux plans (222) formés sur une paroi externe de celle-ci, chacun des deux plans (222) étant symétrique par rapport au centre de la première section tubulaire (22) de telle sorte qu'il puisse être serré par une clef ou d'autres outils manuels, l'élément de conduction thermique (20) étant ainsi tourné pour se connecter avec ou être retiré du support (32).

4. Arbre d'essieu de roue motrice telle que revendiquée dans la revendication 1, **caractérisé en ce que** l'élément de conduction thermique (20) est muni d'un manchon de montage (60) qui est monté sur une paroi externe de la première section tubulaire (22).

5. Arbre d'essieu de roue motrice telle que revendiquée dans la revendication 4, **caractérisé en ce que** le manchon de montage (60) inclut une nervure périphérique (62) s'étendant vers l'extérieur à partir de la paroi externe de celui-ci et configurée pour buter contre la portion de connexion (26) de l'élément de conduction thermique (20).
